# EUROPEAN PATENT APPLICATION

(11) **EP 3 407 542 A1**
(43) Date of publication of application: **28.11.2018**
(21) Application number: 17172538.5
(22) Date of filing: 23.05.2017
(51) Int. Cl.: H04L 12/26, H04W 56/00, H04W 24/00, B60R 16/023, H04L 12/40

(54) **METHOD SYSTEM AND COMPUTER PROGRAM FOR COMMUNICATION BETWEEN ELECTRONIC CONTROL UNITS**

(71) Applicant: Ningbo Geely Automobile Research & Development Co. Ltd., Hangzhou Bay New District Ningbo 315336 (CN)
(72) Inventor: PALANDER, Michael, 433 66 Sävedalen (SE); MOESTAM, Robert, 352 42 Växjö (SE)
(74) Representative: Bergenstråhle Group AB

(57) **Abstract**

A method, system and computer program performed by a system (60) and a system (60) for wireless communication between electronic control units (ECU's) in a communications network (50), the electronic control units being adapted for association with at least one vehicle, the method comprising determining (S100) a first electronic control unit (100), determining (S110) a second electronic control unit (110), determining (S120) a first network delay between the first electronic control unit (100) and the second electronic control unit (110), calculating (S130) a first offset time for the first network delay, detecting (S140) time from a time source (120), detecting (S150) pulse from a pulse source (130), transmitting (S160) a message from the first electronic (100) control unit to the second electronic control unit (110), coordinated processing (S170) of the message in the first electronic control unit (100) and the second electronic control unit (110) based on the first offset time, the time and the pulse.

## Description

### TECHNICAL FIELD

The present disclosure relates generally to a method, system and computer program for communication between electronic control units.

### BACKGROUND

Today's vehicles, such as cars, are complex technical platforms. The vehicles as such contain many different systems and components integrated to cooperate with each other. The systems and components are based on mechanical, chemical and electronic components, as well as software based components.

In operation, the vehicles will be used in a large variety of environments over a long lifetime. Different usage environments and different ways of operation of a vehicle put different kinds of constraints on a vehicle. It is expected that a vehicle is possible to service according to a planned service scheme and that potential faults are possible to analyze, identify and resolve.

Based on the complexity of today's vehicles, the development of today's vehicles consequently also becomes a complex process. As in most complex technology development, it may be desired to break down a development into different sub projects or separate tasks. Each task or area may in itself contain many different components. Examples are engine, collision safety system, gear box/system, infotainment system, electrical power, etc.

When developing a vehicle, it is desired during the development to test individual sub-systems or components intended for later integration into the vehicle, as part of the development process. It may further be desired to test the cooperation or integration between different sub-systems or components during the development of the components or verify the components integration before assembly of a complete vehicle.

It is a problem in today's complex development processes to test all components intended to be assembled into one vehicle. Each component or subsystem may need to be tested individually, such that obvious errors are found before integrated into a vehicle. In some cases, it may be desired to test a couple of or a group of components or sub-subsystems together, without having access to a complete vehicle. Different solutions are commonly used, for example, MIL (Model In the Loop), SIL (Software In the Loop) and HIL (Hardware In the Loop).

Another problem is that the development and testing may be distributed over a large area, such as a factory or R&D campus. When testing ECU's (Electronic Control Unit), it may be required that the ECU's are located closely together, in a physical proximity similar to the real vehicle. However, the R&D or testing of individual ECU's may be separated by hundreds of meters, several kilometers or even globally distributed.

Yet another problem may be to monitor a vehicle partially or completely assembled, when being tested outside a normal test system, such as MIL, SIL or HIL.

### SUMMARY

It is an object of the invention to address at least some of the problems and issues outlined above. It is possible to achieve these objects and others by using a method and an apparatus as defined in the attached independent claims.

According to one aspect, a method is provided performed by a system for wireless communication between electronic control units (ECU's) in a communications network, the electronic control units being adapted for association with at least one vehicle. The method comprises determining a first electronic control unit. The method comprises determining a second electronic control unit. The method comprises determining a first network delay between the first electronic control unit and the second electronic control unit. The method comprises calculating a first offset time for the first network delay. The method comprises detecting time from a time source. The method comprises detecting pulse from a pulse source. The method comprises transmitting a message from the first electronic control unit to the second electronic control unit. The method comprises coordinated processing of the message in the first electronic control unit and the second electronic control unit based on the first offset time, the time and the pulse.

According to another aspect, a system is provided for wireless communication between electronic control units (ECU's) in a communications network, the electronic control units adapted for association with at least one vehicle, the system comprising at least one processor and at least one memory, said memory containing instructions executable by said processor. The system is configured to determine a first electronic control unit. The system is configured to determine a second electronic control unit. The system is configured to determine a first network delay between the first electronic control unit and the second electronic control unit. The system is configured to calculate a first offset time for the first network delay. The system is configured to detect time from a time source. The system is configured to detect pulse from a pulse source. The system is configured to transmit a message from the first electronic control unit to the second electronic control unit. The system is configured to carry out coordinated processing of the message in the first electronic control unit and the second electronic control unit based on the first offset time, the time and the pulse.

According to another aspect, a computer program comprising computer readable code means is provided which, when run in a system for wireless communication between electronic control units (ECU's) in a communications network, the electronic control units adapted for association with at least one vehicle, causes the system to perform the method of determining a first electronic control unit. The computer program causes the system to perform the method of determining a second electronic control unit. The computer program causes the system to perform the method of determining a first network delay between the first electronic control unit and the second electronic control unit. The computer program causes the system to perform the method of calculating a first offset time for the first network delay. The computer program causes the system to perform the method of detecting time from a time source. The computer program causes the system to perform the method of detecting pulse from a pulse source. The computer program causes the system to perform the method of transmitting a message from the first electronic control unit to the second electronic control unit. The computer program causes the system to perform the method of coordinated processing of the message in the first electronic control unit and the second electronic control unit based on the first offset time, the time and the pulse.

The above method, system and computer program may be configured and implemented according to different optional embodiments. In one possible embodiment, the communication between the first electronic control unit and the second electronic control unit is message based, wherein each message comprises at least one header field and one payload field. In one possible embodiment, the communication between the first electronic control unit and the second electronic control unit is in the format of a: FlexRay Automotive Communication Bus (FlexRay), Time-Triggered Protocol, or Controller Area Network (CAN-bus). In one possible embodiment, the time source is a satellite navigation system or global satellite navigation system (NSS/GNSS).

In one possible embodiment, the pulse source is a satellite navigation system or global satellite navigation system. In one possible embodiment, the first electronic control unit or the second electronic control unit is a Central Electronic Module (CEM). In one possible embodiment, the method is performed by the Central Electronic Module (CEM). In one possible embodiment, storing the first offset time in a signal database. In one possible embodiment, the signal database is comprised in the Central Electronic Module (CEM). In one possible embodiment, transmitting the message on a modulated baseband radio signal. In one possible embodiment, transmitting the message on a mobile communication network.

Further possible features and benefits of this solution will become apparent from the detailed description below.

### BRIEF DESCRIPTION OF THE DRAWINGS

The solution will now be described in more detail by means of exemplary embodiments and with reference to the accompanying drawings, in which:
Fig. 1 is a block diagram illustrating an exemplifying overview of the solution.
Fig. 2 is a flow chart illustrating a procedure performed by the system.
Fig. 3 illustrates some further possible embodiments of the solution.
Fig. 4 is a block diagram illustrating the solution, according to yet further possible embodiments.
Fig. 5 is a flow chart flow chart illustrating a procedure performed by the system, according to further possible embodiments.
Fig. 6 illustrates some further possible embodiments of the solution in more detail.
Fig. 7 illustrates some further possible embodiments of the solution in a test scenario.
Fig. 8 illustrates some further possible embodiments of the solution in another test scenario.
Fig. 9 illustrates some further embodiments of the solution with a block diagram of a system.
Fig. 10 is a block diagram illustrating an electronic control unit in more detail, according to further possible embodiments.

### DETAILED DESCRIPTION

Briefly described, a solution is provided to enable a distributed system, for testing of electronic control units adapted for association with a vehicle. The solution enables wireless communication between electronic control units, thus allowing communication over longer distances and without the hassle of troublesome cabling between different test rigs.

The solution enables synchronous execution of data by electronic control units cooperating in a communications network, even where the electronic control units may be separated such that time delays may occur in the network. By sharing a common time and by sharing a common pulse, it is possible for electronic control units to carry out coordinated processing of messages.

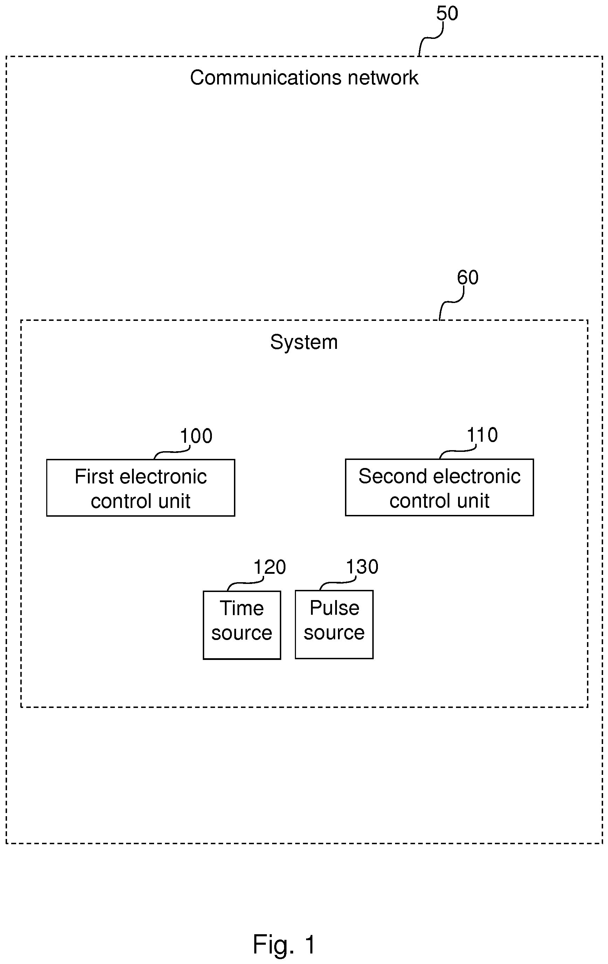

Now the solution will be described in more detail. Fig. 1 shows a non-limiting overview of the solution, with a communications network 50 enabling communication in the solution. Further is a system 60 including a first electronic control unit 100 and a second electronic control unit 110 illustrated, together with a time source 120 and a pulse source 130 for enabling of coordinated message processing.

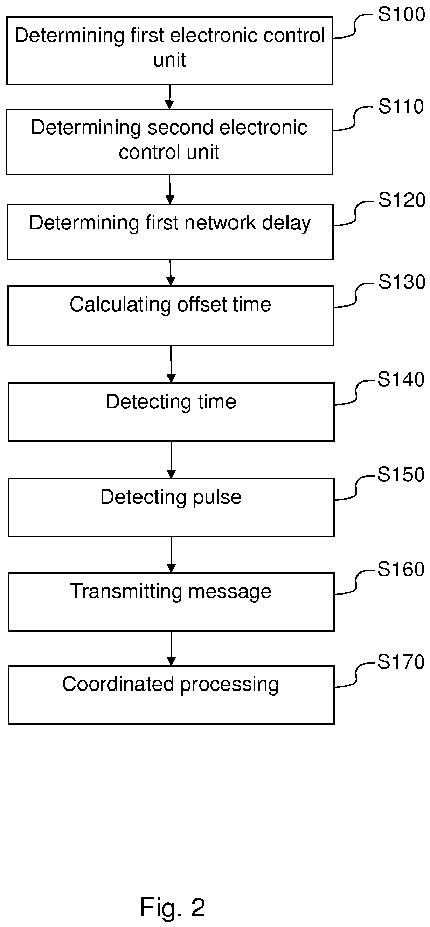

Fig. 2 illustrates a method performed by the system 60 for wireless communication between electronic control units 100 and 110 in the communications network 50. The electronic control units 100 and 110 are adapted for association with at least one vehicle. The method comprises determining **S100** a first electronic control unit 100. The method comprises determining **S110** a second electronic control unit 110. The method comprises determining **S120** a first network delay between the first electronic control unit 100 and the second electronic control unit 110. The method comprises calculating **S130** a first offset time for the first network delay. The method comprises detecting **S140** time from a time source 120. The method comprises detecting **S150** pulse from a pulse source 130. The method comprises transmitting **S160** a message from the first electronic 100 control unit to the second electronic control unit 110. The method comprises coordinated processing **S170** of the message in the first electronic control unit 100 and the second electronic control unit 110 based on the first offset time, the time and the pulse.

The first electronic control unit 100 and the second electronic control unit 110 may also be described under the term ECU. An electronic control unit 100 and 110 may be an embedded system with a general purpose or an embedded system with a specific purpose in a vehicle. Non limiting examples of electronic control units 100 and 110 is: Electronic/engine Control Module (ECM), Powertrain Control Module (PCM), Transmission Control Module (TCM), Brake Control Module (BCM or EBCM), Central Control Module (CCM), Central Timing Module (CTM), General Electronic Module (GEM), Body Control Module (BCM), Suspension Control Module (SCM), control unit, or control module, Door control unit (DCU), Engine control unit, Electric Power Steering Control Unit (PSCU), Human-machine interface (HMI): wherein sometimes the functions of the Engine Control Unit and transmission control unit (TCU) are combined into a single unit called the Powertrain Control Module. Further non-exhaustive examples include Seat Control Unit, Speed control unit (SCU), Telematic control unit (TCU), Transmission control unit (TCU), Brake Control Module (BCM; ABS or ESC), Battery management system. Additionally, ECUs may be embedded in sensors such as forward looking cameras, scanning and/or static Lidar, Radar, etc.

The electronic control units 100 and 110 are adapted for association with at least one vehicle. The electronic control units 100 and 110 may be operated independently connected to each other. This operation may for example be performed in a test rig such as model in the loop (MIL), software in the loop (SIL), system in a loop (also abbreviated SIL) or a hardware in the loop (HIL). The electronic control units 100 and 110 may be operated partially integrated in a vehicle and partially independently. The electronic control units 100 and 110 may be operated fully integrated in a vehicle, such as an assembled vehicle.

In the solution, when determining the first electronic control unit 100 and the second electronic control unit 110, it is determined that the electronic control units 100 and 110 are connected, reachable and supposed to participate in the communication. Such determination may be performed through regular network means, for example broadcast messages, boundary scan, not limiting to other methods for discovery of connected units.

When the first electronic control unit 100 and the second electronic control unit 110 is determined, the network delay between the two electronic control units is determined. The network delay may for example be determined by sending a network ping message or some other round trip time measuring message, to determine the time delay caused by the network between the first electronic control unit 100 and the second electronic control unit 110.

A non-limiting example of the solution may include determination of the first network delay between the first electronic control unit 100 and the second electronic control unit 110, by time stamping of messages when it leaves the first electronic control unit 100, whereby the second electronic control unit 110 can determine the network delay by reading the time stamp and compare with the actual time. The time is provided from the time source 120. This procedure may be performed repeatedly until a maximum network delay has been determined.

Based on the first network delay, the first offset time is calculated. The first offset time indicates the time difference between the first electronic control unit 100 and the second electronic control unit 110 caused by communications network 50 delay.

Detection of the time from the time source 120 may include detecting an absolute time. The absolute time may for example include hours, minutes, seconds and parts of seconds, and other time formats. Detection of the pulse from the pulse source 130 is advantageously detected form a stable and reliable pulse source.

The message transmitted from the first electronic control unit 100 to the second electronic control unit 110 may be a standard message commonly provided between electronic control units 100 and 110, messages commonly provided during a vehicle operation. The message may also be a message provided in various test scenarios, with the purpose of testing the first electronic control unit 100, the second electronic control unit 110 or the integration of the first electronic control unit 100 and the second electronic control unit 110 together.

By usage of the first offset time, the time and the pulse, it is possible to carry out coordinated processing of a message in the first electronic control unit 100 and the second electronic control unit 110, even when there is a network delay longer than in an in-vehicle communication. In a normal vehicle for person transportation, such as a car, the distance may not be longer than up to 10 meters. And for a bus or a truck the distance may normally not exceed 40 meters. In both examples the communication is often carried by wireline. However, in a test environment as described above, the distance may be significantly longer. The communication may further be routed via different network units, processing the message, causing further delay. The first network delay between the first electronic control unit 100 and the second electronic control unit 110 is, therefore handled by the coordinated processing and therefore advantageously enabling synchronous processing of the message.

The solution described by the disclosure may include a plurality of electronic control units. Up until today, a small vehicle for personal transportation may include thirty electronic control units, where more complex vehicles recently developed may contain hundreds of electronic control units. The number of electronic control units in a vehicle is expected to continue to grow.

Various embodiments described in this disclosure may be optionally used individually or combined together. The person skilled in the art may utilize or adopt a suitable combination of embodiments for the desired preferred effect.

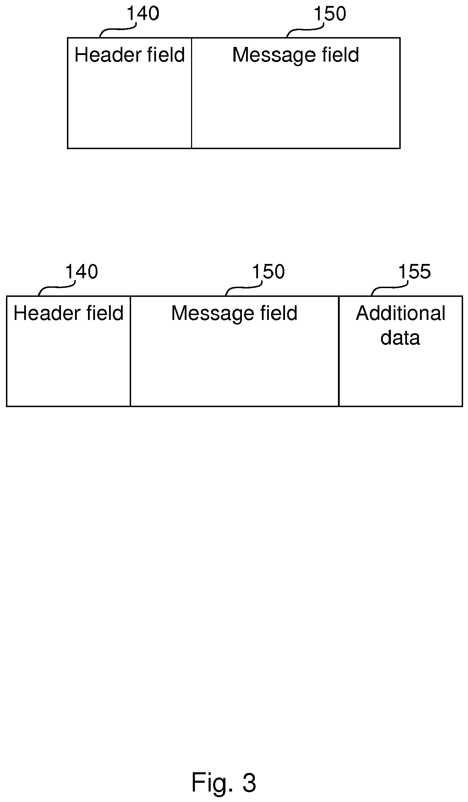

Fig. 3 illustrates an optional embodiment of the solution. In this exemplifying embodiment, the communication between the first electronic control unit and the second electronic control unit is message based, where each message comprises at least one header field 140 and one payload field 150. The message may alternatively comprise a header field 140, a message field 150 and a field for additional data 155. Using a structure with header and payload, may simplify message handling in a communications network 50.

In another optional embodiment of the solution, the communication between the first electronic control unit 100 and the second electronic control unit 110 is in the format of a: FlexRay Automotive Communication Bus (FlexRay), Time-Triggered Protocol, or Controller Area Network (CAN-bus). In other embodiments, the communication between the first electronic control unit 100 and the second electronic control unit 110 may be based on Ethernet, according to IEEE 802.3, etc., or WiFi, according to 802.11, etc., Bluetooth, TCP/IP (Transfer Control Protocol / Internet/Protocol) not limiting to other suitable formats.

In an optional embodiment of the solution, the time source 120 is a satellite navigation system (NSS) or global satellite navigation system (GNSS).

In an optional embodiment of the solution, the pulse source is a satellite navigation system (NSS) or global satellite navigation system (GNSS).

A satellite navigation system (NSS) or global satellite navigation system (GNSS) receiving unit may be obtaining signal from satellites and provide the time as a clock time for the solution. NSS/GNSS provides a reliable time which is obtainable in most areas globally. Non-limiting examples of satellite navigation systems are NAVSTAR Global Positioning System (GPS), GLONASS, Galileo, BeiDou Navigation Satellite System and BeiDou-2.

The NSS/GNSS receiving unit may further provide a pulse with limited drift or variation, therefore providing a reliable source for when a specific clock time is valid. I. e. a specific time is detected. Than is the pulse detected indicates that that clock time is valid at a given moment, such that the clock time may be provided by the time source 120 and when the pulse is provided by the pulse source 130, that particular pulse indicates that the clock time is valid at the moment of receiving the pulse.

Other non-limiting examples of sources of reliable clock time and pulse may be atomic clocks, or provided by an ntp server (Network time protocol, for example described in RFC 5905).

In an optional embodiment of the solution, the first electronic control unit 100 or the second electronic control unit 110 is a Central Electronic Module (CEM).

In an optional embodiment of the solution, the method is performed by the Central Electronic Module (CEM).

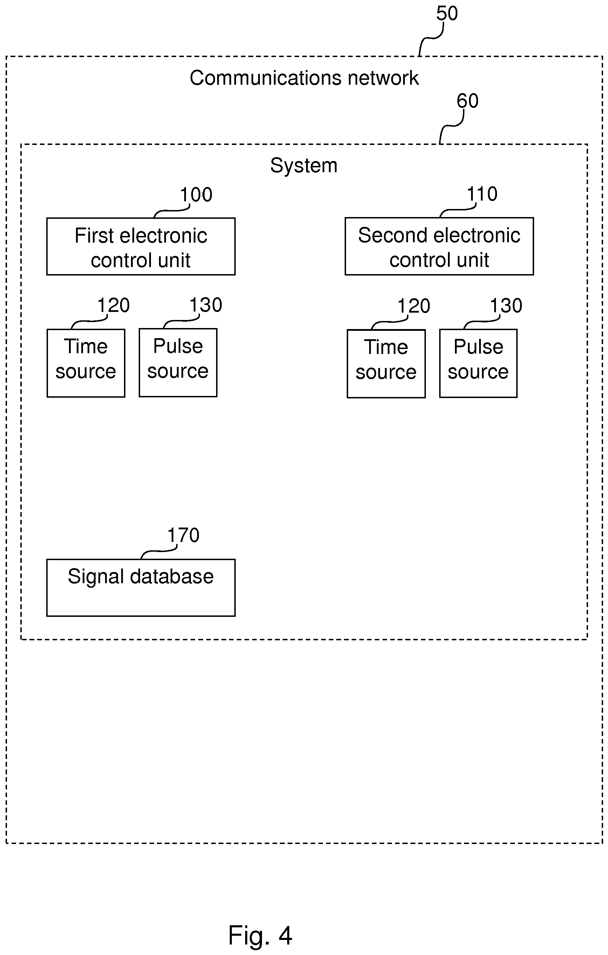

Fig. 4 illustrates possible embodiments of the solution including a signal database 170 for storage of offset data, logical connection between the different Central Electronic Modules, not limiting to other relevant data.

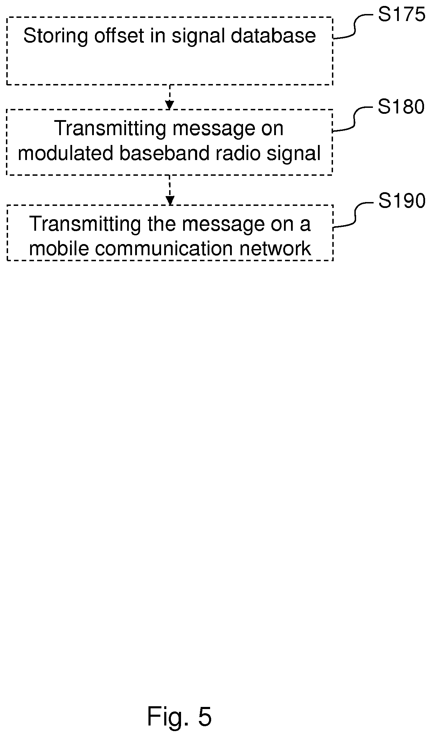

Fig. 5 illustrates optional method steps performed by the system 60. In an embodiment of the solution, the first offset is stored **S175** the signal database 170.

In an optional embodiment of the solution, the signal database 170 is comprised in the Central Electronic Module (CEM).

In an optional embodiment of the solution, the message is transmitted **S180** on a modulated baseband radio signal. Messages may be carried on a pulse band modulated based on the baseband. Messages may also be carried over radio through other methods, known by the person skilled in the art.

In an optional embodiment of the solution, the messages are transmitted **S190** on a mobile communication network.

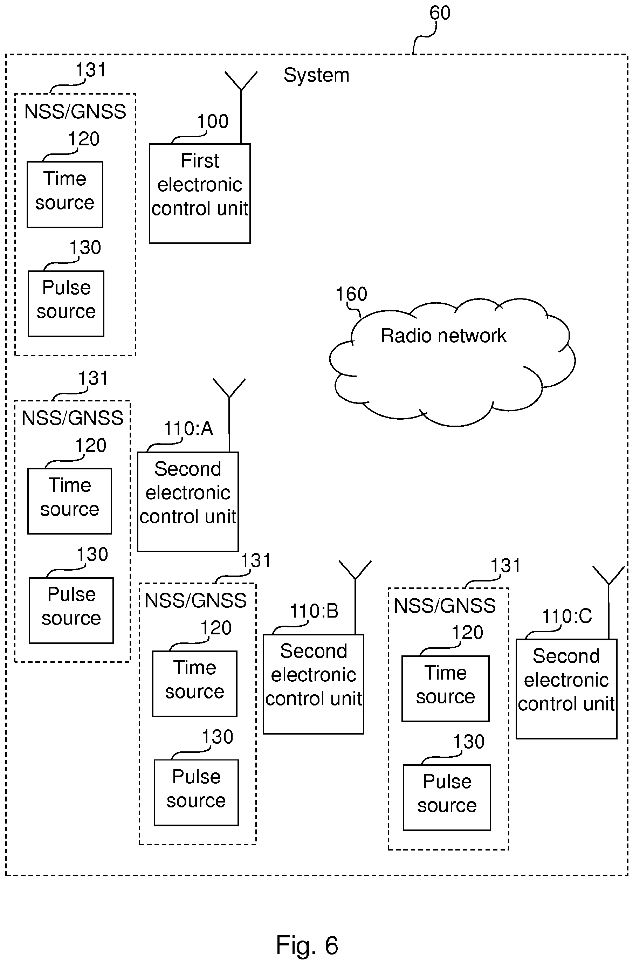

Fig. 6 illustrates further possible embodiments of the solution. In this scenario, a plurality of electronic control units 100 and 110 are illustrated in the system 60. The first electronic unit 100 may detect time from the time source 120 and pulse from the pulse source 130. The time source 120 and the pulse source 130 may be comprised in a NSS/GNSS 131.

Fig. 6 further illustrates a plurality of second electronic control units 110; second electronic control unit 110:A, second electronic control unit 110:B, second electronic control unit 110:C, wherein all of the of second electronic control units 110 detect time from each time source 120 and pulse from each pulse source 130. The communication between the electronic control units 100 and 110:A:B:C are performed over the radio network 160.

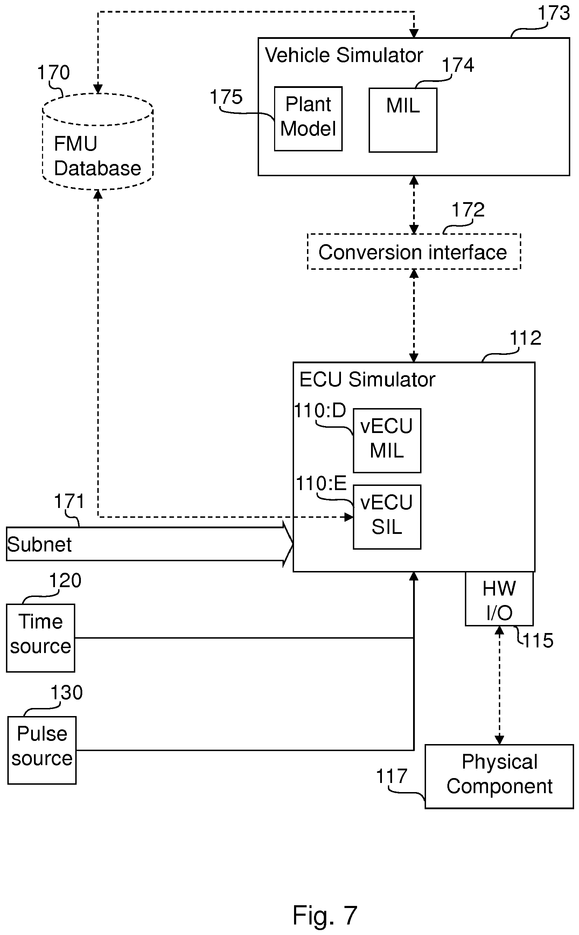

Fig. 7 illustrates possible embodiments of the solution in a test scenario. The figure illustrates a non-limiting example, where the different illustrated units, components and nodes only are for exemplifying and illustrative purposes, and may be adopted, changed or reconfigured be the person skilled in the art. In this illustrative example, some abbreviations have been used in the figure for overall readability of the figure. The figure illustrates an ECU (electronic control unit) simulator 112. The ECU simulator 112 comprises an vECU MIL 110:D (virtual electronic control unit model in the loop). The ECU simulator 112 further comprises a vECU SIL 110:E (virtual electronic control unit software in the loop). Yet further is a HW I/O 115 (hardware in-/out unit) associated with the ECU simulator 112. The HW I/O 115 provides a physical interface to the ECU simulator 112.

The figure further illustrates a physical component 117. The physical component in the exemplifying scenario may be an engine, such as an engine running on electrical power, diesel or gas. Further, a subnet 171 is illustrated. It may be preferable to divide the communications network 50 into different subnets. The subnets may be seen as different domains. Non-limiting examples are domains for powertrain, brakes, different kind of chassis units such as climate, multimedia and alarm. Dividing the communications network 50 into different subnets enables to make different prioritizations of data or handling of data. The ECU simulator 112 may be connected to an optional conversion interface 172 via the radio network 160. The radio network 160 is illustrated in fig. 6. The conversion interface 172 is further connected to a vehicle simulator 173 via conventional data communication, such as TCP/IP communication (Transfer Control Protocol/Internet Protocol), or any other suitable data communication solution. In this exemplifying embodiment, the communication is performed via the optional conversion interface 172, for handling of the communication between the ECU simulator 112. The MIL112 (Model In the Loop) may provide characteristics for a specific vehicle model, in the vehicle simulator. The characteristics may be provided by power plant model 175. The power plant model 175 may provide different profiles for simulation, such as driver model, road model, traffic model, vehicle model, virtual components, not limiting to other characteristics necessary or preferred for simulation.

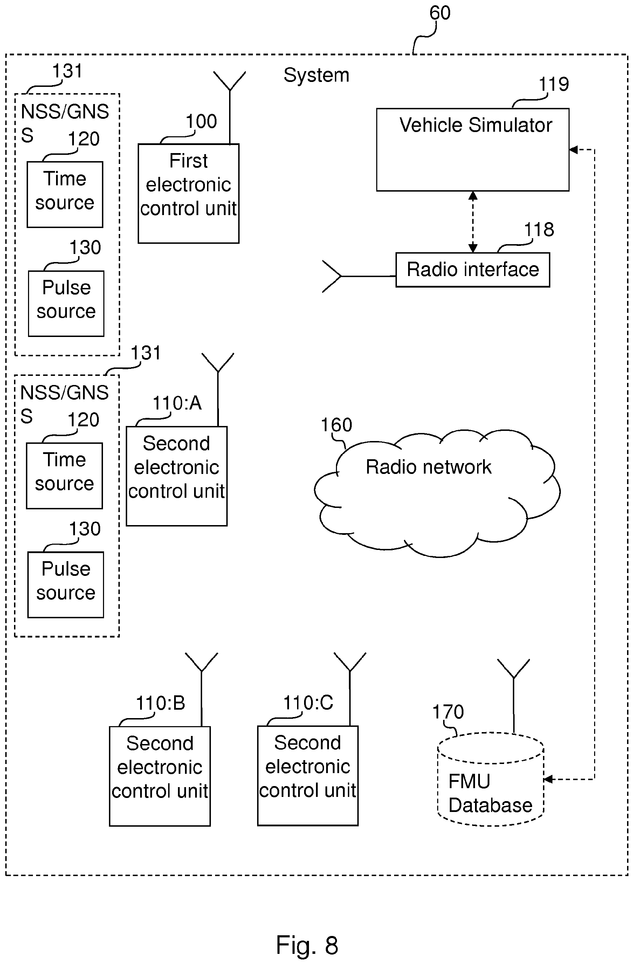

Fig. 8 illustrates an overview of the solution, with a first electronic control unit 100 with its time source 120 and pulse source 130, optionally provided by a GPS 131. The figure further illustrates a plurality of second electronic control units 110, in the figure illustrated as second control unit 110:A, second control unit 110:B, second control unit 110:C. In this figure the second control units may for example represent a first HIL, second HIL, VDDM HIL, SRS HIL, CCM HIL, not limiting other types of electronic control units. The figure further shows the radio interface 118 connecting the vehicle simulator 119 via the radio network 160 to the first electronic unit 100 and the second electronic control units 110:A, 110:B and 110:C.

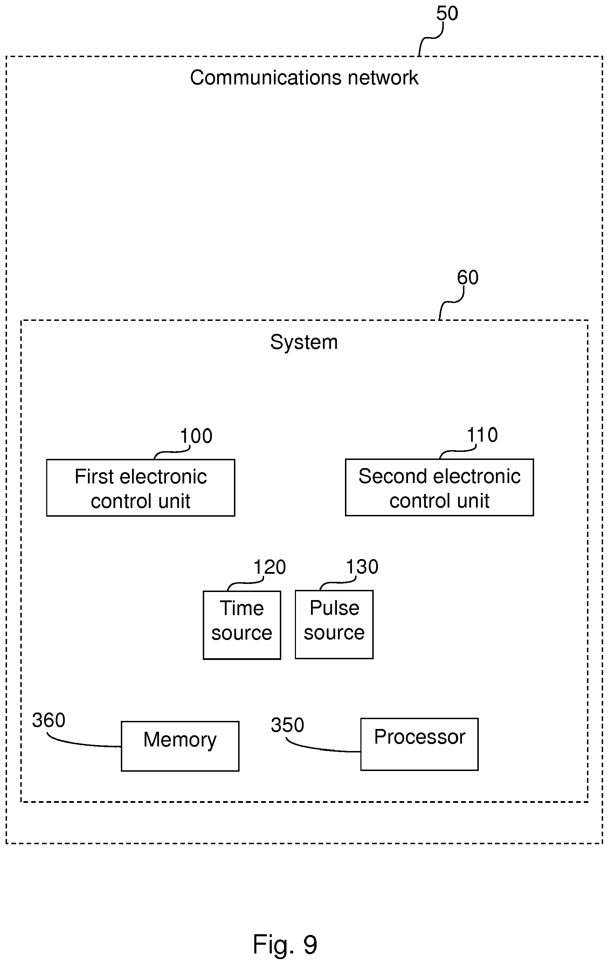

Fig. 9 illustrates an embodiment of the solution, a system 60 for wireless communication between electronic control units (ECU's) in a communications network 50 is provided. The electronic control units are adopted for association with at least one vehicle. The system 60 comprises at least one processor 350 and at least one memory 360, said memory containing instructions executable by said processor. The system 60 is operative to determine a first electronic control unit 100. The system 60 is operative to determine a second electronic control unit 110. The system 60 is operative to determine a first network delay between the first electronic control unit 100 and the second electronic control unit 110. The system 60 is operative to calculate a first offset time for the first network delay. The system 60 is operative to detect time from a time source 120. The system 60 is operative to detect pulse from a pulse source 130. The system 60 is operative to transmit a message from the first electronic control unit 100 to the second electronic control unit 110. The system 60 is operative to coordinate processing of the message in the first electronic control unit 100 and the second electronic control unit 110 based on the first offset time, the time and the pulse.

In an optional embodiment of the solution, the time source 120 and the pulse source 130 is a satellite navigation system (NSS) or global satellite navigation system (GNSS)131.

In an optional embodiment of the solution, first electronic control unit 100 or the second electronic control unit 110 is a Central Electronic Module (CEM).

In an optional embodiment of the solution, the system 60 is comprised in the Central Electronic Module (CEM).

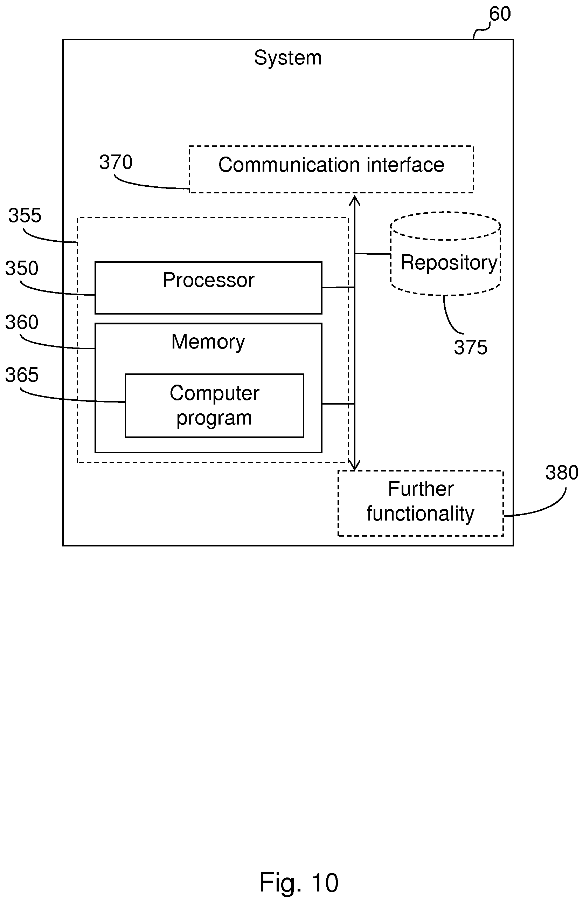

Fig. 10 shows an embodiment of the solution for wireless communication between electronic control units (ECU's) in a communications network (not shown in Fig. 10), the electronic control units adopted for association with at least one vehicle. The system 60 comprises at least one processor 350 and at least one memory 360, said memory containing instructions executable by said processor, whereby the system 60 is operative to determine a first electronic control unit (not shown). The memory 360 further contains instructions executable by said at least one processor whereby the system 60 is operative to determine a second electronic control unit (not shown). The memory 360 further contains instructions executable by said at least one processor whereby the system 60 is operative to determine a first network delay between the first electronic control unit (not shown) and the second electronic control unit (not shown). The memory 360 further contains instructions executable by said at least one processor whereby the system 60 is operative to calculate a first offset time for the first network delay. The memory 360 further contains instructions executable by said at least one processor whereby the system 60 is operative to detect time from a time source (not shown). The memory 360 further contains instructions executable by said at least one processor whereby the system 60 is operative to detect pulse from a pulse source (not shown). The memory 360 further contains instructions executable by said at least one processor whereby the system 60 is operative to transmit a message from the first electronic (not shown) control unit to the second electronic control unit (not shown). The memory 360 further contains instructions executable by said at least one processor whereby the system 60 is operative to coordinated process of the message in the first electronic control unit (not shown) and the second electronic control unit (not shown) based on the first offset time, the time and the pulse.

The system 60 may further comprise a communication interface 370, which may be considered to comprise conventional means for communicating from and/or to the other devices in the network, such as the vehicle simulator 173 or other devices or nodes in the communication network (not shown). The conventional communication means may include at least one transmitter and at least one receiver. The communication interface may further comprise one or more repositories 375 and further functionality 380 useful for the system 60 to serve its purpose as system for wireless communication between electronic control units (ECU's), such as power supply, internal communications bus, internal cooling, database engine, operating system, not limiting to other functionalities.

The instructions executable by said processor may be arranged as a computer program 365 stored in said at least one memory 360. The at least one processor 350 and the at least one memory 360 may be arranged in an arrangement 355. The arrangement 355 may alternatively be a microprocessor and adequate software and storage therefore, a Programmable Logic Device, PLD, or other electronic component(s)/processing circuit(s) configured to perform the actions, or methods, mentioned above.

The computer program 365 may comprise computer readable code means, which when run in the system 60 causes the system 60 to perform the steps described in any of the methods described in relation to Fig. 2 or 5. The computer program may be carried by a computer readable storage medium connectable to the at least one processor. The computer readable storage medium may be the at least one memory 360. The at least one memory 360 may be realized as for example a RAM (Random-access memory), ROM (Read-Only Memory) or an EEPROM (Electrical Erasable Programmable ROM). Further, the computer program may be carried by a separate computer-readable medium, such as a CD, DVD or flash memory, from which the program could be downloaded into the at least one memory 360.

Although the instructions described in the embodiments disclosed above are implemented as a computer program 365 to be executed by the at least one processor 350 at least one of the instructions may in alternative embodiments be implemented at least partly as hardware circuits. Alternatively, the computer program may be stored on a server or any other entity connected to the communications network to which the system 60 has access via its communications interface 370. The computer program may than be downloaded from the server into the at least one memory 360, carried by an electronic signal, optical signal, or radio signal.

While the solution has been described with reference to specific exemplary embodiments, the description is generally only intended to illustrate the inventive concept and should not be taken as limiting the scope of the solution. For example, the terms "electronic control unit", "time source" and "pulse source" have been used throughout this description, although any other corresponding nodes, devices, units, functions, and/or parameters could also be used having the features and characteristics described here. The solution is defined by the appended claims.

## Claims

1. A method performed by a system (60) for wireless communication between electronic control units (ECU's) in a communications network (50), the electronic control units being adapted for association with at least one vehicle, the method comprising:
- determining (S100) a first electronic control unit (100),
- determining (S110) a second electronic control unit (110),
- determining (S120) a first network delay between the first electronic control unit (100) and the second electronic control unit (110),
- calculating (S130) a first offset time for the first network delay,
- detecting (S140) time from a time source (120),
- detecting (S150) pulse from a pulse source (130),
- transmitting (S160) a message from the first electronic (100) control unit to the second electronic control unit (110),
- coordinated processing (S170) of the message in the first electronic control unit (100) and the second electronic control unit (110) based on the first offset time, the time and the pulse.

2. The method according to claim 1, wherein
- the communication between the first electronic control unit (100) and the second electronic control unit (110) is message based, wherein
- each message comprises at least one header field (140) and one payload field (150).

3. The method according to claim 1 or 2, wherein
- the communication between the first electronic control unit (100) and the second electronic control unit (110) is in the format of a: FlexRay Automotive Communication Bus (FlexRay), Time-Triggered Protocol, or Controller Area Network (CAN-bus).

4. The method according to any of claims 1-3, wherein
- the time source (120) is a satellite navigation system or global satellite navigation system (GNSS) (131).

5. The method according to any of claims 1-4, wherein
- the pulse source (130) is a satellite navigation system or global satellite navigation system (131).

6. The method according to any of claims 1-5, wherein
- the first electronic control unit (100) or the second electronic control unit (110) is a Central Electronic Module (CEM).

7. The method according to any of claims 1-6, wherein
- the method is performed by the Central Electronic Module (CEM).

8. The method according to any of claims 1-7, comprising:
- storing (S175) the first offset time in a signal database (170).

9. The method according to claim 8, wherein
- the signal database (170) is comprised in the Central Electronic Module (CEM).

10. The method according to any of claims 1-9, comprising:
- transmitting (S180) the message on a modulated baseband radio signal.

11. The method according to any of claims 1-10, comprising:
- transmitting (190) the message on a mobile communication network.

12. A system (60) for wireless communication between electronic control units (ECU's) in a communications network (50), the electronic control units adapted for association with at least one vehicle, the system (60) comprising at least one processor (350) and at least one memory (360), said memory containing instructions executable by said processor, whereby the system (60) is configured to:
- determine a first electronic control unit (100),
- determine a second electronic control unit (110),
- determine a first network delay between the first electronic control unit (100) and the second electronic control unit (110),
- calculate a first offset time for the first network delay,
- detect time from a time source (120),
- detect pulse from a pulse source (130),
- transmit a message from the first electronic control unit (100) to the second electronic control unit (110),
- carry out coordinated processing of the message in the first electronic control unit (100) and the second electronic control unit (110) based on the first offset time, the time and the pulse.

13. The system according to claim 12, wherein
- the time source (120) and the pulse source (130) is a satellite navigation system (NSS) or global satellite navigation system (GNSS) (131).

14. The system according to claims 12 or 13, wherein
- the first electronic control unit (100) or the second electronic control unit (110) is a Central Electronic Module (CEM).

15. The system according to any of claims 12-14, wherein
- the system (60) is comprised in the Central Electronic Module (CEM).

16. A computer program (365) comprising computer readable code means, which when run in a system (60) causes the system (60) to perform the method according to any of the claims 1 - 11.

17. A computer readable storage medium comprising a computer program (365) according to claim 16.
